(19) Europäisches Patentamt
European Patent Office
Office européen des brevets

(11) EP 3 498 397 A1

(12) **EUROPEAN PATENT APPLICATION**

(43) Date of publication:
**19.06.2019 Bulletin 2019/25**

(51) Int Cl.:
***B22F 1/00*** *(2006.01)* ***C09D 5/24*** *(2006.01)*
***H01B 1/22*** *(2006.01)* *B22F 1/02* *(2006.01)*

(21) Application number: **17306816.4**

(22) Date of filing: **18.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicants:
- **RHODIA OPERATIONS**
  **75009 Paris (FR)**
- **LE CENTRE NATIONAL DE LA RECHERCHE SCIENTIFIQUE (CNRS)**
  **75794 Paris, Cedex 16 (FR)**

(72) Inventors:
- **PLISSONNEAU, Marie**
  **75014 PARIS (FR)**
- **TREGUER-DELAPIERRE, Mona**
  **33140 Villenave-d'Ornon (FR)**

(74) Representative: **Delenne, Marc**
**Rhodia Services**
**Direction de la Propriété Industrielle**
**40, rue de la Haie-Coq**
**93306 Aubervilliers Cedex (FR)**

(54) **COPPER NANOWIRES COATED WITH PHOSPHOROUS COMPOUND AND FILM THEREOF**

(57) The present invention concerns a process for preparing copper nanowires coated with a phosphorous compound and a process for preparing a film comprising a percolating network of copper nanowires coated with a phosphorous compound. It also pertains to films comprising said percolating network.

EP 3 498 397 A1

## Description

The present invention concerns a process for preparing copper nanowires coated with a phosphorous compound and a process for preparing a film comprising a percolating network of copper nanowires coated with a phosphorous compound. It also pertains to films comprising said percolating network.

Metal nanowires are of particular interest in the fabrication of transparent conducting electrodes because of their conductivity and because of their high aspect ratio which minimizes their percolation threshold. The percolation theory describes connectivity of objects within a network structure, and the effects of this connectivity on the macroscale properties of a system. Percolation threshold is accordingly the formation of a long-range connectivity in a random system. In the case of metal nanowires one of the effects of connectivity is conductivity.

Metal nanowires have a good compromise conductivity / transparency that make them promising in replacing transparent doped metal oxides materials electrodes such as ITO (Indium Tin Oxide) which are expensive because of the rareness of their constituents. Moreover, the brittleness of doped metal oxides materials may be an obstacle to their use in future applications such as flexible devices wherein metal nanowires because of their bendability may be advantageous.

Metal nanowires are relatively easily synthesized via scalable processes that make them very attractive.

Silver nanowires have been extensively studied because of their low electrical resistivity. However, copper is more abundant, less expensive and its electrical resistivity is very close to the resistivity of silver. Thus copper is a good balance between cost and resistivity. Moreover, as copper density is lower than silver density, it provides a large advantage for applications where weight saving is required. Accordingly replacing silver by copper is highly desirable.

Copper, silver and gold belong to the family IB of the periodic table of elements. Compared to other metals they can be found native at the surface of earth since they are more resistant to oxidation. For this reason they are important materials for application in electronics. Anyway, metals at zero valence are sensitive to oxidation. Oxidation may impair the conductivity properties and the transparency of electrodes that would be made from silver or copper nanowires. It is worth to note that C.F. Guo et al noticed, in Materials Today 2015, vol. 18, n° 3, p143 that at a temperature of 85 °C, the resistance of a network comprising copper nanowires increased more rapidly than the resistance of a network comprising silver nanowires when both exposed to air.

To overcome the problem of oxidation some authors have proposed coating or encapsulation of nanowires with insulating materials such as metal oxides or polymers. These methods are not fully satisfactory, since the encapsulation of the metal nanowires with the insulating material is generally accompanied with loss of transparency, loss of flexibility and/or loss of conductivity.

Another strategy is to form a thin oxidation protection layer using molecules having affinity towards the metal surface.

S.-T.Hsiao et al. describe in J.Mater.Chem.C, 2014, 2, 7284 the treatment of silver nanowires with thiophenol in ethanol at 40°C to produce modified silver nanowires exhibiting aromatic moieties at their surface. The authors demonstrated by X-ray Photoelectron Spectroscopy (XPS) analysis that thiophenol was grafted onto the surface of the silver nanowire through Ag-S bond. The resistance towards oxidation and the conductivity of the so modified silver nanowires were not evaluated.

Idier et al. in nanotechnology, (2016), 27 (10) p. 105705 propose transparent electrodes composed of silver nanowires coated with triphenylphosphine ($PPh_3$) in order to reduce the sensitivity of the metal towards oxidation. They propose the formation of a charge-transfer complex between $PPh_3$ and silver at the surface of the nanowires thus stabilizing silver at the zero valence state. They observe that a film composed of silver nanowires coated with $PPh_3$ has, just after its synthesis i.e. at t =0, a conductivity which is similar to the conductivity of a film composed of the same silver nanowires non-coated by $PPh_3$. Moreover, they observe that the values of the transmittance of films containing silver nanowires non-coated or of films containing silver nanowires coated with $PPh_3$ in function of the time of exposure to oxidation by air are relatively stable. Besides, the decrease of the sheet resistance of a film composed of silver nanowires coated with $PPh_3$ is less significant than the decrease observed for films composed of non-coated nanowires when both are exposed to oxidation.

J.Song et al described in Nano Letters, 2014, 14, 6298, the preparation of copper nanowires having $Cu_4Ni$ alloying shells embedded in a polydimethylsiloxane (PDMS) matrix. This conductive elastomer composite material may be used as transparent electrode having some resistance to oxidation in flexible and stretchable electronics. However, the synthesis of copper nanowires bearing the alloyed shell required some harsh conditions to be successful (high temperature, long reaction time...).

There is a need for low cost transparent and conductive electrode that can be easily manufactured/processed. There is a need for this transparent electrode to be flexible and lightweight. There is also a need for simple and not very demanding process suitable to prepare such transparent electrode.

There is a need for low cost highly conducting metal nanowires having sufficiently high aspect ratio to be used in said transparent electrode. There is a need for such conducting metal nanowires having good resistance to oxidation.

There is also a need for an efficient, scalable and low cost process suitable to prepare conducting metal nanowires protected from oxidation.

All these needs and others are satisfied by a process for preparing copper nanowires coated with a phosphorous compound of formula (1)

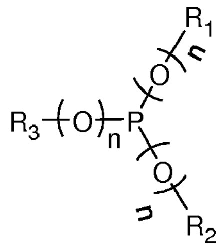

**(1)**

wherein n = 0 or 1 and,
wherein $R_1$, $R_2$ and $R_3$ which may be the same or different are independently selected from $C_1$-$C_{20}$ hydrocarbyl groups, substituted $C_1$-$C_{20}$ hydrocarbyl groups, $C_1$-$C_{20}$ heterohydrocarbyl groups and substituted $C_1$-$C_{20}$ heterohydrocarbyl groups,

comprising the steps of :

- forming a composition (C) comprising a liquid dispersing medium (L) consisting of at least one liquid (LC), copper nanowires and a phosphorous compound (1)
- stirring the composition (C) so as to obtain a dispersion (D) comprising the liquid dispersing medium and, dispersed therein, copper nanowires coated with the phosphorous compound (1)
- recovering the copper nanowires coated with the phosphorous compound (1) from the dispersion (D),
- optionally, purifying the copper nanowires coated with the phosphorous compound (1).

In the wording of the present invention, a phosphorous compound may be understood as at least one phosphorous compound.

The phosphorous compound is used to stabilize the copper nanowires and to protect them from oxidation. Suitable phosphorous compound is expected to give charge transfer complex with metallic copper at the surface of the copper nanowires thus stabilizing copper at the zero valence state.

The phosphorous compound is generally selected from compounds of formula (1) :

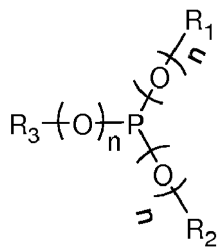

**(1)**

wherein n = 0 or 1 and,
wherein $R_1$, $R_2$ and $R_3$ which may be the same or different are selected from $C_1$-$C_{20}$ hydrocarbyl groups, substituted $C_1$-$C_{20}$ hydrocarbyl groups, $C_1$-$C_{20}$ heterohydrocarbyl groups and substituted $C_1$-$C_{20}$ heterohydrocarbyl groups.

The term "hydrocarbyl" as used herein refers to a group only containing carbon and hydrogen atoms. The hydrocarbyl group may be saturated or unsaturated, linear, branched or cyclic. If the hydrocarbyl is cyclic, the cyclic group may be an aromatic or non-aromatic group.

The term "heterohydrocarbyl" as used herein refers to a hydrocarbyl group wherein one or more of the carbon atom(s) is/are replaced by a heteroatom, such as Si, S, N or O. Included within this definition are heteroaromatic rings, i.e. wherein one or more carbon atom within the ring structure of an aromatic ring is replaced by a heteroatom.

Generally, $R_1$, $R_2$ and $R_3$ which may be the same or different are selected among linear, branched or cyclic alkyl groups, optionally substituted aryl groups and optionally substituted heteroaryl groups. A suitable alkyl group may be, without being exhaustive, methyl, ethyl, n-propyl, iso-propyl, n-butyl, tert-butyl, sec-butyl, isobutyl, hexyl, cyclohexyl, heptyl or n-octyl group. Suitable substituents for aryl or heteroaryl group may be, without being exhaustive, halogen

atoms, alkyl groups such as methyl, ethyl, n-propyl, iso-propyl, n-butyl, tert-butyl, sec-butyl, isobutyl, hexyl, cyclohexyl, heptyl or n-octyl group, alkoxy groups such as methoxy or ethoxy or perhalogenated alkyl groups such as trifluoromethyl group.

Preferably, $R_1$, $R_2$ and $R_3$ are selected among optionally substituted aryl and heteroaryl groups, more preferably, $R_1$, $R_2$ and $R_3$ are selected from optionally substituted aryl groups and even more preferably from optionally substituted phenyl group. Good results were obtained with $R_1$, $R_2$ and $R_3$ being phenyl group.

Aryl group is obtained from removing one hydrogen atom from an aromatic hydrocarbon which can be monocyclic or polycyclic. The term aromatic hydrocarbon designates a cyclic conjugated unsaturated hydrocarbon ring having a number of delocalized $\pi$ electrons following the Huckel rule. An aryl group suitable for the invention can be obtained from removing one hydrogen atom from benzene, naphthalene or phenanthrene.

Heteroaryl group is obtained from removing one hydrogen atom from a heteroaromatic hydrocarbon which can be monocyclic or polycyclic. The term heteroaromatic hydrocarbon designates a cyclic conjugated unsaturated hydrocarbon ring containing one or more heteroatoms and having a number of delocalized $\pi$ electrons following the Huckel rule. A heteroaryl group suitable for the invention can be obtained from removing one hydrogen atom from thiophene, pyridine or furan.

In the polycyclic aromatic or heteroaromatic hydrocarbons, the rings can be fused or they can be linked by C-C linkage or by a spiro linkage.

In some embodiment, $R_1$, $R_2$ and $R_3$ are as previously described and n = 0. In some preferred embodiment n =0, $R_1$, $R_2$ and $R_3$ being phenyl group.

Just as matter of example the phosphorous compounds represented in figures **(I)** to **(XXXIX)** below can be suitable for the present invention.

The compounds of figures (XXII) to (XXXIX) are preferably used, compounds of figures (XXII) to (XXXV) are more preferably used and compounds (XXII) to (XXVI) are even more preferably used. Good results were obtained with compound (XXII).

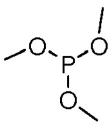
**(I)**

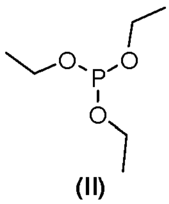
**(II)**

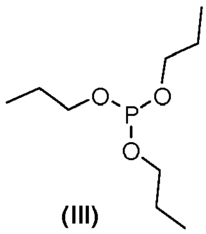
**(III)**

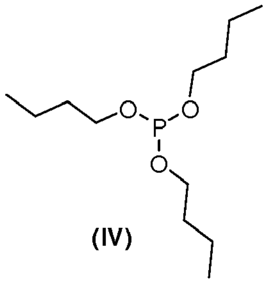
**(IV)**

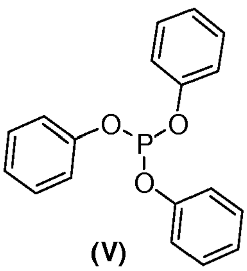
**(V)**

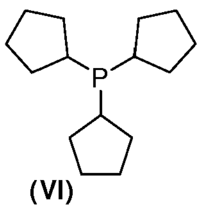
**(VI)**

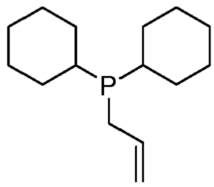
**(VII)**

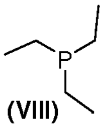

(VIII)

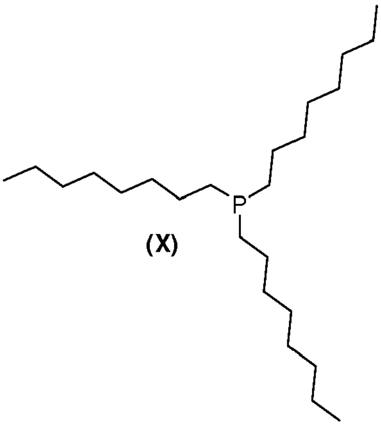

(X)

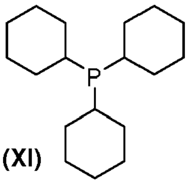

(XI)

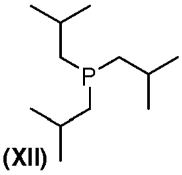

(XII)

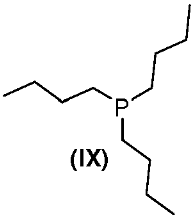

(IX)

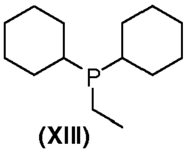

(XIII)

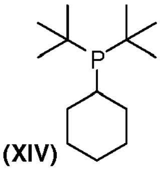

(XIV)

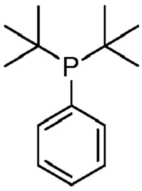

(XV)

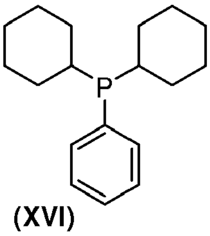

(XVI)

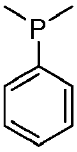

(XVII)

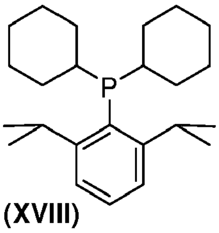

(XVIII)

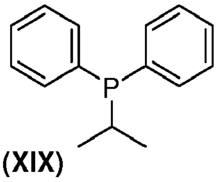

(XIX)

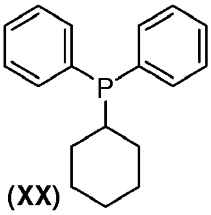

(XX)

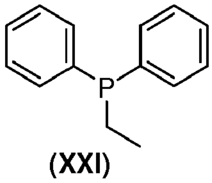

(XXI)

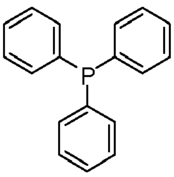

(XXII)

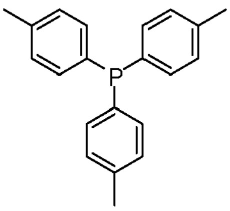

(XXIII)

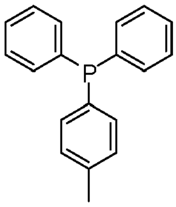

(XXIV)

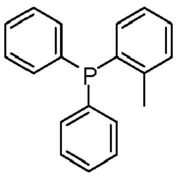

(XXV)

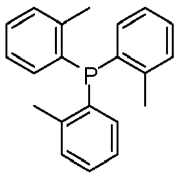

(XXVI)

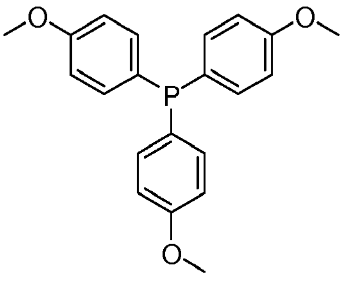

(XXVII)

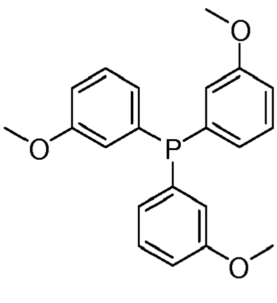

(XXVIII)

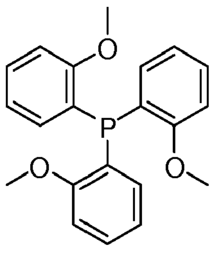

(XXIX)

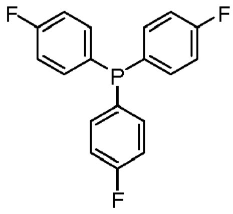
(XXX)

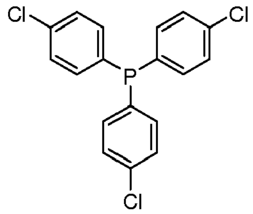
(XXXI)

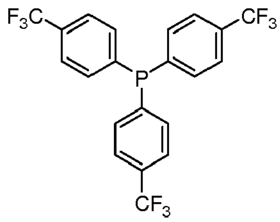
(XXXII)

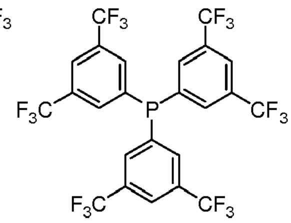
(XXXIII)

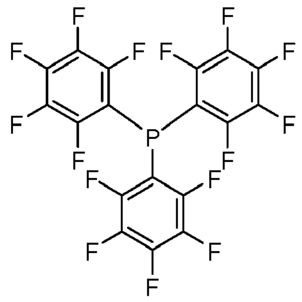
(XXXIV)

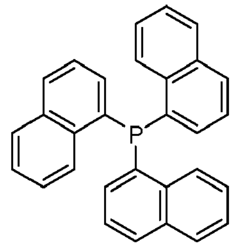
(XXXV)

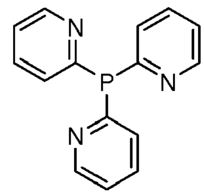
(XXXVI)

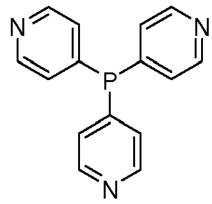
(XXXVII)

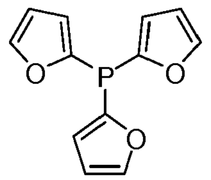
(XXXVIII)

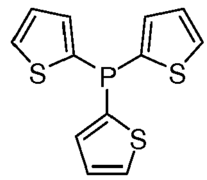
(XXXIX)

Generally copper nanowires suitable for the invention are prepared by hydrothermal method in water solution by reduction of a copper salt using a reducing agent such as glucose or ascorbic acid. Copper nanowires can be prepared by reduction of cupric chloride, cupric nitride, cupric acetate or cupric bromide in the presence of glucose or ascorbic acid and of an amine as capping agent. Octadecylamine, oleylamine, hexadecylamine and tetradecylamine are suitable amines for allowing the preparation of nanowires having controlled parameters such as thickness or length.

However, suitable copper nanowires may be synthesized by any other process well known by the skilled person. For example, copper nanowires can be synthesized via the polyol route in the presence of a directing agent, wherein polyols are used as solvent and as reducing agent for copper salt. For example, $Cu(NO_3)_2$, $2H_2O$ can be the copper salt, ethylene glycol or propylene glycol the polyol and PVP the directing agent. The reaction is generally stopped by quenching using cold water.

Finally, any commercial copper nanowires may be used for the present invention.

The copper nanowires suitable for the invention have an average length ranging generally from 1 to 250 μm, often from 10 to 150 μm and sometimes from 15 to 100 μm.

The copper nanowires have an average diameter ranging generally from 5 to 500 nm, often from 10 to 250 nm, sometimes from 15 to 100 nm and rarely from 20 to 70 nm.

The copper nanowires have generally an average aspect ratio of at least 20, preferably of at least 50 and even preferably of at least 60. The copper nanowires have usually an average aspect ratio of at most 10000, preferably of at most 2000, even more preferably of at most 1000 and the most preferably at most 500.

The aspect ratio is the ratio of length to width of a particle (ISO 13794, 1999). An average aspect ratio may be determined by image processing of transmission electron microscopy (TEM) or scanning electron microscopy (SEM). In the case of nanowires the diameter is equivalent to the width.

The liquid dispersing medium which is used to disperse the copper nanowires consists of at least one liquid compound (LC); it may be composed of one and only one liquid compound (LC) or it may be a mixture of liquid compounds (LC). The liquid dispersing medium may comprise at least one polar liquid compound, at least one nonpolar liquid compound or a mixture thereof.

In some embodiments, the at least one liquid compound (LC) is selected from polar protic solvents, polar aprotic solvents and mixtures thereof.

In preferred embodiments the at least one liquid compound (LC) is a polar protic solvent; more preferably, it is selected from the group consisting of water, alcohols and mixtures thereof and even more preferably it is an alcohol. Just for the sake of example, suitable alcohols are methanol, ethanol, isopropyl alcohol or ethylene glycol. Good results were obtained with isopropyl alcohol.

The formation of the copper/phosphorous compound charge-transfer complex is completed by stirring the composition (C) giving a dispersion (D) comprising the liquid dispersing medium and, dispersed therein, copper nanowires coated with the phosphorous compound (1). Stirring can be carried out by any mean well known by the skilled person. Just for the sake of example, ultrasound bath mixing, static mixing or mechanical stirring may be used.

Generally, stirring is conducted at room temperature under inert atmosphere of argon or nitrogen.

Generally stirring is conducted during at least 10 minutes and advantageously stirring is conducted during a period of time ranging from 0.5 to 5 hours.

The amount of copper nanowires present in the dispersion (D) represents generally a concentration of copper not exceeding 100 $mmol.l^{-1}$, preferably not exceeding 50 $mmol.l^{-1}$ and more preferably not exceeding 30 $mmol.l^{-1}$. Besides, the concentration of Cu is generally of at least 1 $mmol.l^{-1}$, preferably of at least 5 $mmol.l^{-1}$ and more preferably of at least 7 $mmol.l^{-1}$.

The molar ratio of phosphorous compound over copper in the dispersion is generally of at most 2, preferably of at most 1 and even more preferably of at most 0.5. Besides, the molar ratio is generally of at least 0.15, preferably of at least 0.25 and more preferably of at least 0.45.

The copper nanowires coated with the phosphorous compound may be recovered by any technique useful to recover nanowires. For example, the copper nanowires coated with the phosphorous compound can be recovered by sedimentation of the dispersion (D). The sedimentation is advantageously accelerated by centrifugation. After sedimentation, the supernatant can be removed and the coated nanowires isolated. The coated nanowires can be isolated by filtering the sedimented dispersion especially by vacuum-filtering.

In some embodiments, the recovered coated nanowires can be dispersed again in a liquid before being isolated in order to remove impurities that may be eliminated with the supernatant. Several cycles, dispersion-sedimentation may be used to enhance the purification. Among impurities one can consider free unbound phosphorous compound molecules or copper nano-objects having an aspect ratio of less than 10.

In some other embodiments, purified coated copper nanowires are dispersed in fresh liquid to give a new dispersion (D).

It is an object of the invention to disclose copper nanowires obtainable by the process previously described, characterized in that the surface of said nanowires is coated with a phosphorous compound of formula (1).

For example X-ray Photoelectron Spectroscopy (XPS) curves of copper nanowires coated with $PPh_3$ in the $P_{2p}$ region and in the $Cu_{2p}$ region may be used to confirm the binding of $PPh_3$ onto the surface of the copper nanowires but any other technique may be used.

Generally, the copper nanowires coated with the phosphorous compound have an average length ranging generally from 1 to 250 $\mu$m, often from 10 to 150 $\mu$m and sometimes from 15 to 100 $\mu$m.

The coated copper nanowires have an average diameter ranging generally from 5 to 500 nm, often from 10 to 250 nm, sometimes from 15 to 100 nm and rarely from 20 to 70 nm.

The coated copper nanowires have generally an average aspect ratio of at least 20, preferably of at least 50 and even preferably of at least 60. The coated copper nanowires have usually an average aspect ratio of at most 10000, preferably of at most 2000, even more preferably of at most 1000 and the most preferably at most 500.

It is another object of the invention to disclose a process for preparing a film comprising a percolating network of copper nanowires coated with a phosphorous compound of formula (1) including the steps of:

- preparing the dispersion (D) as previously described,
- depositing the dispersion (D) onto a substrate so as to form a wet film,
- removing the liquid (LC) from the wet film so as to obtain a film substantially free or even free of any liquid (LC),
- optionally removing the film from the substrate.

By percolating network of copper nanowires is understood random network structure composed of copper nanowires having long range connectivity, an effect of this connectivity on the macro scale being, for example, conductivity.

The deposition of the dispersion (D) onto the substrate is generally made by liquid process. For example, spin coating, doctor blade coating, dip coating, spray coating or printing may be used successfully.

In some embodiments deposition is made by filtration of the dispersion (D) through a porous substrate.

The substrate is generally selected among chemically inert materials, is generally transparent and generally flexible. Just for the sake of example, the substrate can be polyethylene terephthalate (PET), polyethylene naphtalate (PEN), polyimide, polyetheretherketone (PEEK) or glass. When the substrate is a porous substrate it can be for example

alumina membrane.

In some embodiments, the dispersion (D) comprises at least one polymer dissolved in the liquid dispersing medium (L). Just for the sake of example, the polymer may be a fluorinated polymer or a silicone.

Generally, the dispersion deposition is carried out in air. Preferably, the deposition is carried out under controlled atmosphere. Good results were obtained when dispersion was carried out under argon or under nitrogen atmosphere.

Liquid removal can be carried out by heating, optionally under vacuum, the wet film in an oven at a temperature preferably ranging from 40 to 100 °C and more preferably from 50 to 90 °C. When the substrate is a porous substrate the liquid removal generally encompasses a preliminary vacuum filtration before heating.

In preferred embodiments, the liquid removal is carried out under controlled atmosphere.

After removal of the liquid (LC), the film is generally free of any liquid; often it is substantially free of any liquid. In the latter case it comprises a liquid in an amount generally not exceeding 0.3 wt. %, often not exceeding 0.1 wt. % and sometimes not exceeding 0.05 wt. % based on the total weight of the film.

The film substantially free or even free of liquid may be further submitted to a post-treatment to ensure the welding of the contacting nanowires.

In some embodiments further annealing of the film is performed in order to enhance welding between the nanowires. Generally, annealing is performed at a temperature not exceeding 250°C, sometimes not exceeding 200°C and rarely not exceeding 175°C. Besides, annealing is generally performed at a temperature of at least 150°C.

When annealing is performed, the substrate has to survive under the high temperature which is applied. Accordingly, when such annealing is performed the film is either beforehand removed from the substrate or deposited onto a temperature resistant substrate such as glass.

In some other embodiments the resulting film is submitted to pressure in order to enhance welding between nanowires. Pressing is generally not exceeding 100 MPa, sometimes not exceeding 50 MPa and rarely not exceeding 25 MPa. Besides pressing is generally of at least 5 MPa.

Generally the film is submitted to cold pressing at room temperature making this treatment compatible with most substrates such as, just for the sake of example, polyethylene terephthalate (PET), polyethylene naphtalate (PEN), polyimide, polyetheretherketone (PEEK) and glass.

However, the film may be submitted to pressing at higher temperature. The temperature for pressing is generally not exceeding 200°C, sometimes not exceeding 150°C and rarely not exceeding 100°C.

In some other embodiments annealing and submitting to pressure are conducted simultaneously.

In still other embodiments, plasmonic welding is promoted by laser illumination. This treatment is compatible with most substrates such as, just for the sake of example, polyethylene terephthalate (PET), polyethylene naphtalate (PEN), polyimide, polyetheretherketone (PEEK) and glass.

Generally the film is uses as deposited on the substrate. However, the film may be removed from the substrate for example by dipping the substrate in a solvent such as water, alcohols or mixtures thereof.

In some embodiment, the film is removed by dissolving the substrate. It is the case for example when alumina porous membrane is used as the substrate and is further dissolved with NaOH solution to recover the film.

It is another object of the present invention to disclose a film obtainable by the process previously described comprising a percolating network of copper nanowires coated with a phosphorous compound of formula (1).

Generally, the film consists of a percolating network of copper nanowires coated with a phosphorous compound of formula (1). However, the film may comprise at least one other compound such as unbound phosphorous compound or copper nano-objects having an aspect ratio of less than10.

In some special embodiments, the film comprises a percolating network of copper nanowires coated with a phosphorous compound of formula (1), embedded in a polymer matrix.

The film is generally free of any liquid (LC); often it is substantially free of any liquid. In the latter case it comprises a liquid in an amount generally not exceeding 0.3 wt. %, often not exceeding 0.1 wt. % and sometimes not exceeding 0.05 wt. % based on the total weight of the film.

The film according to the invention has a thickness generally of at least 10 nm, sometimes of at least 50 nm and rarely of at least 100 nm. Besides, the film has a thickness generally of at most 2 μm, sometimes of at most 1 μm and rarely of at most 500 nm. Thickness can be measured by atomic force microscopy (AFM).

Generally, the film is transparent, conductive and flexible which is highly desirable for application such as electrode in replacement of ITO.

The performance of the film according to the invention as transparent electrode can be assessed by measuring two parameters, namely sheet resistance ($R_{sh}$) and optical transmittance (T). Thus, for promising films, it is always advantageous to measure low $R_{sh}$ and a high value of T.

The trade-off between transmittance and conductivity can be quantified by a figure of merit (FoM) defined as:

$$FoM = \frac{\sigma_{dc}}{\sigma_{op(\lambda)}}$$

where σdc is the film's electrical conductivity and σop is the film's optical conductivity at a given wave length λ. Accordingly, the higher the FoM is, the better is the film as transparent conductive electrode.

FoM can be extracted from the following Tinkham equation wherein T is the optical transmittance, $R_{sh}$ the sheet resistance of the film under study as previously described and where $Z_0$ is the free space impedance.

$$T = \left(1 + \frac{Z_0}{2R_{sh}} \cdot \frac{\sigma_{dc}}{\sigma_{op(\lambda)}}\right)^{-2}$$

Optical transmittance T (%) of the film comprising the percolating network of copper nanowires coated with the phosphorous compound can be evaluated using a uv-visible spectrophotometer at a wavelength of 550 nm.

The authors have found that film comprising percolating network of copper nanowires coated with a phosphorous compound can be used as transparent electrode since high transmittance can be obtained.

Sheet resistance $R_{sh}$ (Ω/sq) is generally determined by four-probe measurement, wherein fixed current is injected through two outer probes and resulting voltage measured between two inner probes. A resistance is measured according to Ohm's law and is converted to sheet resistance according to the method well known by the skilled person.

The authors have noticed that the sheet resistance of a film comprising percolating network of copper nanowires coated with phosphorous compound is kept unchanged when measured at t = 0 i.e. just after synthesis and when measured after exposition to oxidation for a period depending on the oxidation conditions. For the same period of time, the sheet resistance of a film comprising percolating network of copper nanowires non-coated with phosphorous compound increases after exposition to the same oxidation conditions. Taking into account that at t = 0 the sheet resistance of a film comprising a percolating network of copper nanowires coated with phosphorous compound is very close to, or even equal to, the sheet resistance of a film comprising a percolating network of copper nanowires non-coated with phosphorous compound, the authors have found that copper nanowires can be efficiently protected from oxidation by coating the surface of said nanowires with a phosphorous compound.

Oxidation conditions may be either exposition merely to air for several hours or exposition to harsher oxidation conditions, such as exposition to nitric acid vapors, for several minutes.

The authors have also found that the figure of merit FoM = $\sigma_{dc}/\sigma_{op(\lambda)}$ is high enough i.e. above 35 for the film to be considered as a promising transparent conductive electrode for device application.

The authors have noticed that the sheet resistance of a film comprising a percolating network of copper nanowires coated with $PPh_3$ is kept unchanged for substantially the same duration or for the same duration as the sheet resistance of a film comprising a percolating network of silver nanowires coated with $PPh_3$ when both are exposed to the same conditions of oxidation from t = 0. Accordingly the sheet resistance of the film comprising the percolating network of copper nanowires coated with $PPh_3$ increases with substantially the same speed or with the same speed as the sheet resistance of the film comprising the percolating network of silver nanowires coated with $PPh_3$ when exposed to the same conditions of oxidation. These observations are quite surprising since copper is known by the skilled person to be much more sensitive to oxidation than silver.

Moreover, the authors have also noticed that at t = 0 i.e. just after the synthesis and thus before being submitted to oxidation, the value of the sheet resistance of a film comprising a percolating network of copper nanowires coated with a phosphorous compound such as $PPh_3$ is close to the sheet resistance of a film comprising a percolating network of silver nanowires coated with the same phosphorous compound at t = 0.

The authors have further noticed that the figure of merit (FoM = $\sigma_{dc}/\sigma_{op(\lambda)}$) of a film comprising a percolating network of copper nanowires coated with phosphorous compound such as $PPh_3$ can be substantially the same or can even be the same as the figure of merit of a film comprising a percolating network of silver nanowires coated with the same phosphorous compound.

Finally, the authors have concluded that surprisingly copper can advantageously replace silver since copper coated with $PPh_3$ can be substantially as resistant or even as resistant to oxidation as silver coated with $PPh_3$. Accordingly, the authors have found that a film comprising a percolating network of copper nanowires coated with phosphorous compound is a good candidate for the preparation of cheap, transparent, flexible, conductive electrode having enhanced resistance towards oxidation.

It is another object of the present invention to disclose an electric device comprising copper nanowires coated with a phosphorous compound and/or at least one film comprising a percolating network of copper nanowires network coated with a phosphorous compound embedded or not in a polymer matrix.

## Examples

Transmission electron microscopy (TEM) images were acquired on carbon-coated copper grids using JEM-1400 Transmission Electron Microscope available from JEOL operating at 120 kV. Statistical analysis of TEM images allowed the determination of average diameter of copper nanowires.

X-ray Photoelectron Spectroscopy (XPS) measurements were recorded using a Thermo Scientific™ K-Alpha™ X-ray Photoelectron Spectrometer System with a monochromated Al K-$\alpha$ source (E=1486.6 eV). The x-ray spot size was 200 $\mu$m and charge compensation was used on insulating samples. The spectrometer was calibrated with monocrystalline gold and silver foils (binding energies of 84.0 eV for Au 4f7/2 and 368.25 eV for Ag 3d5/2). Surveys were acquired at a 200 eV pass energy and the high resolution spectra were acquired with a pass energy of 40 eV. Thermo Scientific™ Avantage Data System software was used for fitting and quantification (Scofield table).

**Synthesis of copper nanowires in water.**

2.1 g of $CuCl_2 . 2H_2O$, 5 g of glucose and 18 g of hexadecylamine (HDA) were added in a 1.5 L flask containing 1 L of ultrapure water and stirred vigorously overnight at room temperature to obtain a blue emulsion. The flask containing the emulsion was then sealed and heated statically in an oven at 85°C for 20 hours, then cooled to room temperature. The resulting brownish red dispersion was washed to remove the excess HDA by three cycles comprising centrifugation at 6000 rpm for ten minutes, elimination of the supernatant and redispersion in 1L of water.

**Synthesis of copper nanowires in a 96.25/3.75 vol./vol. water/ethanol mixture.**

2.1 g of $CuCl_2 . 2H_2O$, 5 g of glucose and 18 g of hexadecylamine were added in a 1.5L flask containing 0.9625 L of ultrapure water and 0.0375 mL of absolute ethanol, and stirred vigorously overnight at room temperature to obtain a blue emulsion. The flask containing the emulsion was then sealed and heated statically in an oven at 85°C for 20 hours, then cooled to room temperature. The resulting brownish red dispersion was washed to remove the excess HDA by three cycles comprising centrifugation at 6000 rpm for ten minutes, elimination of the supernatant and redispersion in 1L of water.

**Synthesis of copper nanowires in a 92.5/7.5 vol./vol. water/ethanol mixture.**

2.1 g of $CuCl_2 . 2H_2O$, 5 g of glucose and 18 g of hexadecylamine were added in a 1.5L flask containing 0.925 L of ultrapure water and 0.075 mL of absolute ethanol, and stirred vigorously overnight at room temperature to obtain a blue emulsion. The flask containing the emulsion was then sealed and heated statically in an oven at 85°C for 20 hours, then cooled to room temperature. The resulting brownish red dispersion was washed to remove the excess HDA by three cycles comprising centrifugation at 6000 rpm for ten minutes, elimination of the supernatant and redispersion in 1L of water.

**Purification of copper nanowires.**

A volume of slurry containing the copper nanowires was transferred in an equal volume of chloroform. After vortexing for 5-10 seconds, the aqueous and organic phase separated immediately. The CuNW crossed the interface to enter the organic phase and deposit as red flakes at the bottom of the flask. The complete separation was achieved after 30 minutes. The water phase, containing the co-products (such as copper nanoparticles) was removed. Then, the organic phase was centrifuged at 4000 rpm for 6 min to precipitate the copper nanowires. After removing the chloroform, the copper nanowires precipitate was washed with isopropanol by two cycles comprising centrifugation at 4000 rpm for 6 minutes, elimination of the supernatant and redispersion in isopropanol.

**Coating of triphenylphosphine ($PPh_3$) onto copper nanowires.**

The copper nanowires dispersion in isopropanol was adjusted by adding isopropanol so as to reach a copper concentration of 10 mM. To this dispersion was added a volume of a freshly prepared 12.5 mM $PPh_3$ dispersion in isopropanol in order to obtain a molar ratio Cu:$PPh_3$ of 1:0.45. The mixture was incubated at room temperature for 4 hours under mild agitation and then washed with isopropanol by two cycles comprising centrifugation at 6000 rpm for 10 minutes, elimination of the supernatant and redispersion in the same volume of isopropanol. After the latest removal of the supernatant copper nanowires having $PPh_3$ molecules adsorbed at their interface were recovered.

**Characterization of copper nanowires coated with $PPh_3$.**

Comparison of XPS curves in the $P_{2p}$ region and in the $Cu_{2p}$ region of, respectively, copper nanowires and copper nanowires coated with $PPh_3$ confirm the binding of $PPh_3$ onto the surface of the copper nanowires.

## Claims

1. A process for preparing copper nanowires coated with a phosphorous compound of formula (1)

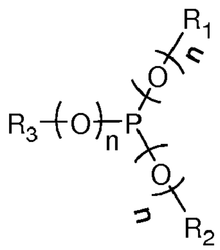

**(1)**

wherein n = 0 or 1 and,
wherein $R_1$, $R_2$ and $R_3$ which may be the same or different are independently selected from $C_1$-$C_{20}$ hydrocarbyl groups, substituted $C_1$-$C_{20}$ hydrocarbyl groups, $C_1$-$C_{20}$ heterohydrocarbyl groups and substituted $C_1$-$C_{20}$ heterohydrocarbyl groups,

comprising the steps of :

- forming a composition (C) comprising a liquid dispersing medium (L) consisting of at least one liquid (LC), copper nanowires and a phosphorous compound (1),
- stirring the composition (C) so as to obtain a dispersion (D) comprising the liquid dispersing medium (L) and, dispersed therein, copper nanowires coated with the phosphorous compound (1),
- recovering the copper nanowires coated with the phosphorous compound (1) from the dispersion (D),
- optionally, purifying the copper nanowires coated with the phosphorous compound (1).

2. The process according to claim 1, wherein $R_1$, $R_2$ and $R_3$ are selected among linear, branched or cyclic alkyl groups, optionally substituted aryl groups and optionally substituted heteroaryl groups.

3. The process according to claim 1 or 2, wherein $R_1$, $R_2$ and $R_3$ are optionally substituted aryl groups.

4. The process according to claim 3, wherein the aryl group is phenyl group.

5. The process according to any one of the preceding claims, wherein n = 0.

6. The process according to any one of claims 1 to 5, wherein the copper nanowires have an average length ranging from 1 to 250 μm and an average diameter ranging from 10 to 500 nm.

7. The process according to any one of claims 1 to 6, wherein the liquid (LC) is an alcohol.

8. A process for preparing a film comprising a percolating network of copper nanowires coated with a phosphorous compound of formula (1) including the steps of:

- preparing the dispersion (D) according to any one of claims 1 to 7,
- depositing the dispersion (D) onto a substrate so as to form a wet film,
- removing the liquid (LC) from the wet film so as to obtain a film substantially free or even free of any liquid (LC),
- optionally removing the film from the substrate.

9. The process according to claim 8, wherein the obtained film is further submitted to a post-treatment to ensure the welding of the contacting nanowires.

**10.** The process according to claim 8 or 9, wherein the dispersion (D) comprises at least one polymer dissolved in the liquid dispersing medium (L).

**11.** Copper nanowires coated with a phosphorous compound of formula (1) as shown in claim 1, wherein n is as defined in claim 1 or 5 and, wherein $R_1$, $R_2$ and $R_3$ are as defined in any one of claims 1 to 4.

**12.** Copper nanowires according to claim 11, which have an average length ranging from 1 to 250 $\mu$m and an average diameter ranging from 10 to 500 nm.

**13.** A film comprising a percolating network of copper nanowires coated with a phosphorous compound of formula (1) according to claim 11 or 12.

**14.** The film according to claim 13, which is embedded in a polymer matrix.

**15.** An electric device comprising the copper nanowires according to claim 11 or 12 or the film according to claim 13 or 14.

Europäisches Patentamt
European Patent Office
Office européen des brevets

# EUROPEAN SEARCH REPORT

Application Number
EP 17 30 6816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ENYI YE ET AL: "Disproportionation for Growing Copper Nanowires and their Controlled Self-Assembly Facilitated by Ligand Exchange", CHEMISTRY - A EUROPEAN JOURNAL, vol. 17, no. 11, 7 March 2011 (2011-03-07), pages 3074-3077, XP055473729, DE ISSN: 0947-6539, DOI: 10.1002/chem.201002987 | 1-9, 11-13,15 | INV. B22F1/00 C09D5/24 H01B1/22 ADD. B22F1/02 |
| Y | * page 3074, right-hand column, paragraph 2 * * page 3075, right-hand column, paragraph 1 * * page 3074, left-hand column, paragraph 1 * ----- | 10,14 | |
| Y | US 2015/013763 A1 (MATSUMURA TOKIHIKO [JP] ET AL) 15 January 2015 (2015-01-15) | 10,14 | |
| A | * claims 13, 19, 20 * * page 6, paragraph [0089] * ----- | 1-9, 11-13,15 | TECHNICAL FIELDS SEARCHED (IPC) |
| A | CN 105 328 206 A (UNIV BEIJING CHEMICAL) 17 February 2016 (2016-02-17) * the whole document * ----- | 1-15 | B22F C09D H01B |

The present search report has been drawn up for all claims

2

| Place of search | Date of completion of the search | Examiner |
|---|---|---|
| The Hague | 9 May 2018 | Helgadóttir, Inga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 30 6816

This annex lists the patent family members relating to the patent documents cited in the above-mentioned European search report. The members are as contained in the European Patent Office EDP file on
The European Patent Office is in no way liable for these particulars which are merely given for the purpose of information.

09-05-2018

| Patent document cited in search report | Publication date | Patent family member(s) | Publication date |
|---|---|---|---|
| US 2015013763 A1 | 15-01-2015 | CN 104205244 A | 10-12-2014 |
| | | JP 5832943 B2 | 16-12-2015 |
| | | JP 2013201006 A | 03-10-2013 |
| | | KR 20140129206 A | 06-11-2014 |
| | | US 2015013763 A1 | 15-01-2015 |
| | | WO 2013141278 A1 | 26-09-2013 |
| CN 105328206 A | 17-02-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **C.F. GUO et al.** *Materials Today,* 2015, vol. 18 (3), 143
- **S.-T.HSIAO et al.** *J.Mater.Chem.C,* 2014, vol. 2, 7284
- **IDIER et al.** *nanotechnology,* 2016, vol. 27 (10), 105705
- **J.SONG et al.** *Nano Letters,* 2014, vol. 14, 6298